# EUROPÄISCHE PATENTSCHRIFT

(11) **EP 1 055 051 B1**
(45) Veröffentlichungstag und Bekanntmachung des Hinweises auf die Patenterteilung: **20.08.2003**
(21) Anmeldenummer: 99959393.2
(22) Anmeldetag: 09.12.1999
(51) Int. Cl.: F01D 5/06

(54) **VERBINDUNGSANORDNUNG ZWEIER LAUFSCHEIBEN EINER AXIAL-STRÖMUNGSMASCHINE**
CONNECTING CONFIGURATION OF TWO RUNNING DISCS OF AN AXIAL-FLOW TURBINE
SYSTEME DE LIAISON DE DEUX DISQUES DE TURBINE D'UNE TURBOMACHINE AXIALE

(30) Priorität: 14.12.1998 DE 19857554
(43) Veröffentlichungstag der Anmeldung: 29.11.2000
(73) Patentinhaber: BMW ROLLS-ROYCE GmbH, 61440 Oberursel (DE)
(72) Erfinder: BÖCK, Alexander, D-82288 Kottgeisering (DE)
(74) Vertreter: Schmitz, Hans-Werner, Dipl.-Ing.
(86) Internationale Anmeldenummer: EP9909688
(87) Internationale Veröffentlichungsnummer: WO00036279

(56) Entgegenhaltungen:
- BE-A- 537 643
- DE-C- 944 646
- US-A- 2 614 796
- US-A- 2 772 853

## Beschreibung

Die Erfindung betrifft eine Verbindungsanordnung zweier hintereinander angeordneter Laufscheiben einer Axial-Strömungsmaschine, insbesondere zweier Turbinen-Laufscheiben eines Flugtriebwerkes, wobei von den Laufscheiben im wesentlichen in Axialrichtung abragende und einander zugewandte Verbindungsstege mittels mehrerer über deren Umfang verteilt angeordneter stiftförmiger Verbindungselemente, insbesondere Schrauben, lösbar miteinander verbunden sind. Zum technischen Umfeld wird beispielshalber auf die DE 34 44 586 A1 und US-A-2 614 796 verwiesen.

Beispielsweise bei einer zweistufigen Hochdruckturbine eines Flugtriebwerkes ist es aus Sicherheitsgründen wünschenswert, zwischen den beiden Turbinenscheiben eine Labyrinthdichtung einzufügen, welche verhindert, daß das über die Schaufeln dieser Laufscheiben geführte Heißgas bei einem irgendwie gearteten Versagen des Gesamtsystems in den Raum zwischen den Laufscheiben gelangt. Eine solche Labyrinthdichtung ist in der genannten DE 34 44 586 A1 in Form einer sog. "Mini-Disc" (hierbei handelt es sich um eine zusätzliche kleine Zwischenscheibe) realisiert.

Ist eine solche Labyrinthdichtung, bspw. in Form der sog. Mini-Disc, vorgesehen, so ist zwangsläufig der Raum zwischen den Laufscheiben nach außen hin verschlossen, so daß die erforderliche mechanische Verbindung dieser Laufscheiben - üblicherweise wird hierfür eine lösbare SchraubVerbindung gewählt - von innen her, d.h. von der Rotationsachse der Axial-Strömungsmaschine aus hergestellt werden muß. Dabei werden die Laufscheiben im bekannten Stand der Technik (und wie auch in der genannten DE 34 44 586 A1 gezeigt) mittels einer Vielzahl von Verbindungsschrauben, die sich in Axialrichtung der Strömungsmaschine erstrecken, miteinander verschraubt, wobei diese Verbindungs-Schrauben (bzw. allgemein stiftförmigen lösbaren Verbindungselemente) zwei von den Laufscheiben im wesentlichen in Axialrichtung abragende und einander zugewandte Verbindungsstege miteinander verbinden.

Der durch die genannten Verbindungsstege gebildete, in Umfangsrichtung umlaufende Verbindungsflansch muß im Hinblick auf die auftretenden dynamischen Belastungen relativ steif gestaltet werden, was in relativ großen geometrischen Abmessungen resultiert. Dementsprechend massiv müssen dann auch die Verbindungs-Schrauben sein. Da diese Schrauben bzw. Verbindungselemente wie bereits erwähnt auch noch von innen her eingesetzt, quasi eingefädelt werden müssen, ergibt sich hiermit ein relativ großer benötigter axialer Abstand zwischen den beiden Laufscheiben, was sich direkt auf die Gesamtlänge der Axial-Strömungsmaschine bzw. des Flugtriebwerkes auswirkt und sich somit ungünstigerweise in einem hohen Gewicht niederschlägt.

Eine Abhilfemaßnahme für diese geschilderte Problematik aufzuzeigen, ist Aufgabe der vorliegenden Erfindung.
Die Lösung dieser Aufgabe ist dadurch gekennzeichnet, daß die Verbindungselemente im wesentlichen in der zur Axialrichtung senkrechten Radialrichtung angeordnet sind. Vorteilhafte Aus- und Weiterbildungen sind Inhalt der Unteransprüche.

Erfindungsgemäß werden die stiftförmigen lösbaren Verbindungselemente, insbesondere Verbindungs-Schrauben, so angeordnet bzw. eingebracht, daß sie sich in ihrer die beiden Verbindungsstege aneinander sichernden Position im wesentlichen in Radialrichtung der Axial-Strömungsmaschine erstrecken, d.h. diese Verbindungselemente können einfach von innen her, also von der Rotationsachse aus, senkrecht zu dieser in den sog. Verbindungsflansch, der durch die Verbindungsstege der beiden Scheiben gebildet wird, eingesteckt bzw. eingeschraubt werden. Daß bei einer derartigen radialen Ausrichtung der stiftförmigen Verbindungselemente der in Axialrichtung gemessene Abstand zwischen den beiden Laufscheiben wesentlich kürzer gehalten werden kann als bei einer axialen Ausrichtung der Verbindungselemente, liegt auf der Hand.

Selbstverständlich müssen bei der Verwendung von Schrauben als Verbindungselemente auf der Rückseite des sog. Verbindungsflansches geeignete Schraubenmuttern oder dgl. vorgesehen sein, jedoch können diese bereits vor dem Zusammenbau bzw. dem Einbau der beiden Laufscheiben in die Axial-Strömungsmaschine in geeigneter Weise bevorzugt an einem der beiden Verbindungsstege befestigt werden. In diesem Zusammenhang sei darauf hingewiesen, daß dann, wenn der Raum zwischen den beiden Laufscheiben auch von außen her zugänglich ist, die stiftförmigen Verbindungselemente selbstverständlich auch von außen her in Radialrichtung in den Verbindungsflansch eingebracht werden können.

Am einfachsten lassen sich die beiden Laufscheiben mit erfindungsgemäß ausgerichteten lösbaren stiftförmigen Verbindungselementen drehfest miteinander verbinden, wenn sich die ringförmigen Verbindungsstege zumindest abschnittsweise überlappen. Eine deutlich verbesserte Verbindung ist jedoch mit den Merkmalen der Unteransprüche möglich. Ein dementsprechend gestaltetes, bevorzugtes Ausführungsbeispiel wird im folgenden zur näheren Erläuterung der Erfindung beschrieben. Dabei zeigt
- Fig.1: einen axialen Halbschnitt durch eine erfindungsgemäße Verbindungsanordnung zweier Laufscheiben,
- Fig.2: eine perspektivische Seitenansicht gemäß Pfeil X aus Fig.1, sowie
- Fig.3: eine räumliche Aufsicht auf die Verbindungsanordnung gemäß der Ansicht von Fig.1, d.h. von der Rotationsachse der Axial-Strömungsmaschine aus.

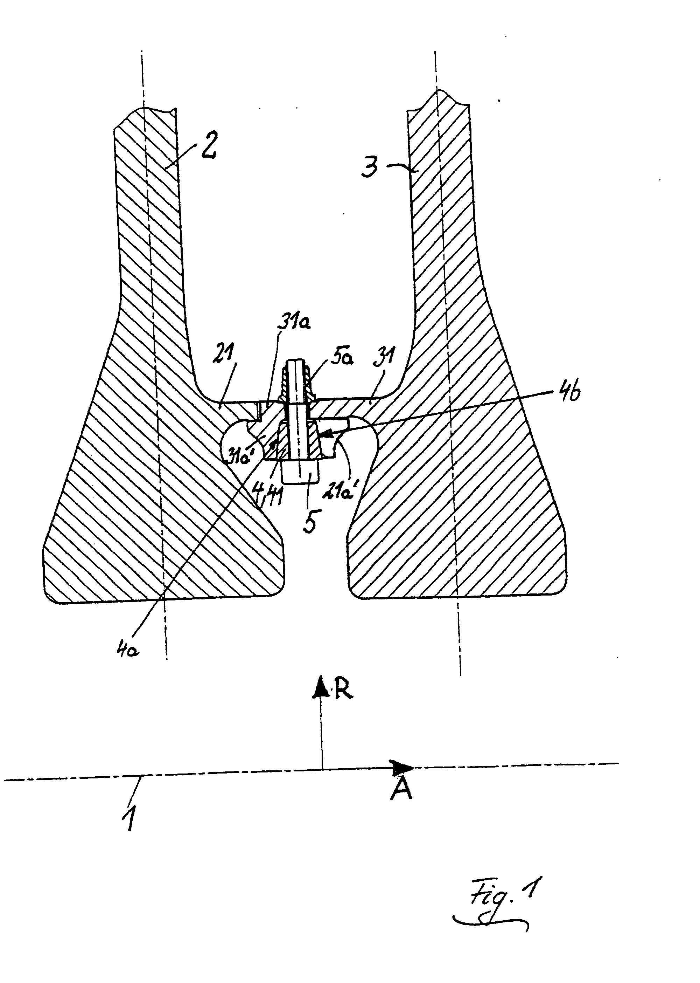

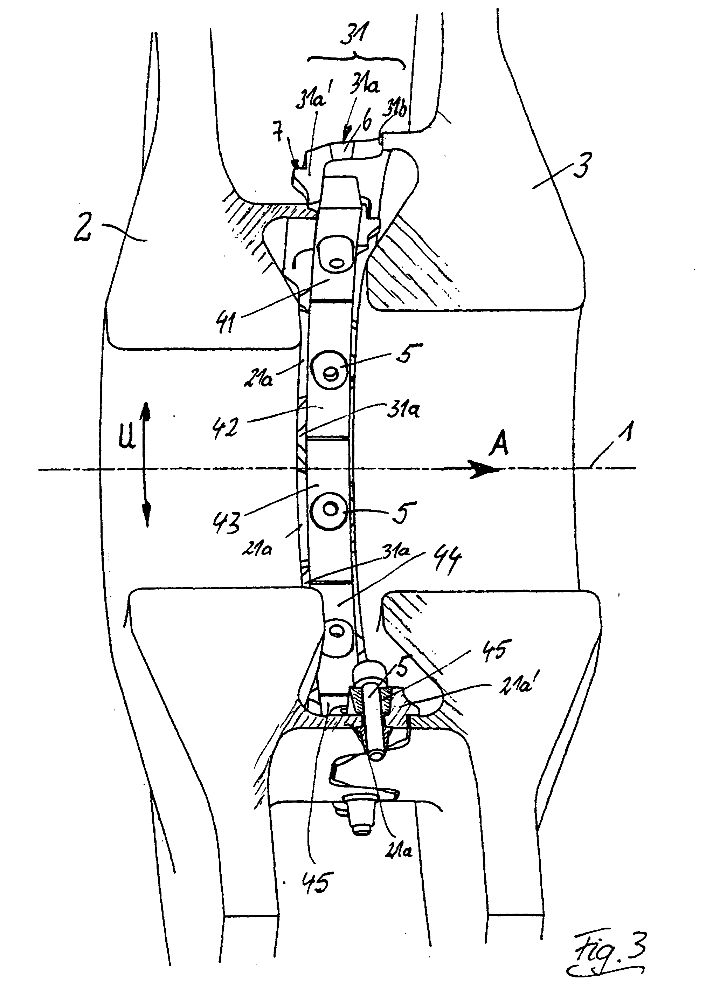

Mit der Bezugsziffer 1 ist die Rotationsachse einer nicht näher dargestellten Axial-Strömungsmaschine bezeichnet, vgl. **Figuren 1, 3.** Um diese Rotationsachse rotieren auch zwei Laufscheiben 2, 3, die umfangsseitig nicht dargestellte Schaufeln tragen, zwischen denen das Arbeitsgas der Strömungsmaschine - insbesondere handelt es sich hierbei um ein Flugtriebwerk und bei den Laufscheiben 2, 3 um die Turbinenscheiben der zweistufigen Hochdruckturbine desselben - hindurchgeführt wird. Die zur Rotationsachse 1 parallele Axialrichtung dieser Strömungsmaschine, entsprechend derer das Arbeitsgas strömt, ist dabei durch den Pfeil A dargestellt und die hierzu senkrecht stehende Radialrichtung durch den Pfeil R.

Die beiden Laufscheiben 2, 3 sind wie üblich drehfest miteinander verbunden und sollen zusätzlich in Axialrichtung A gegeneinander verspannt werden können. Hierzu ist die im folgenden erläuterte Verbindungsanordnung vorgesehen:

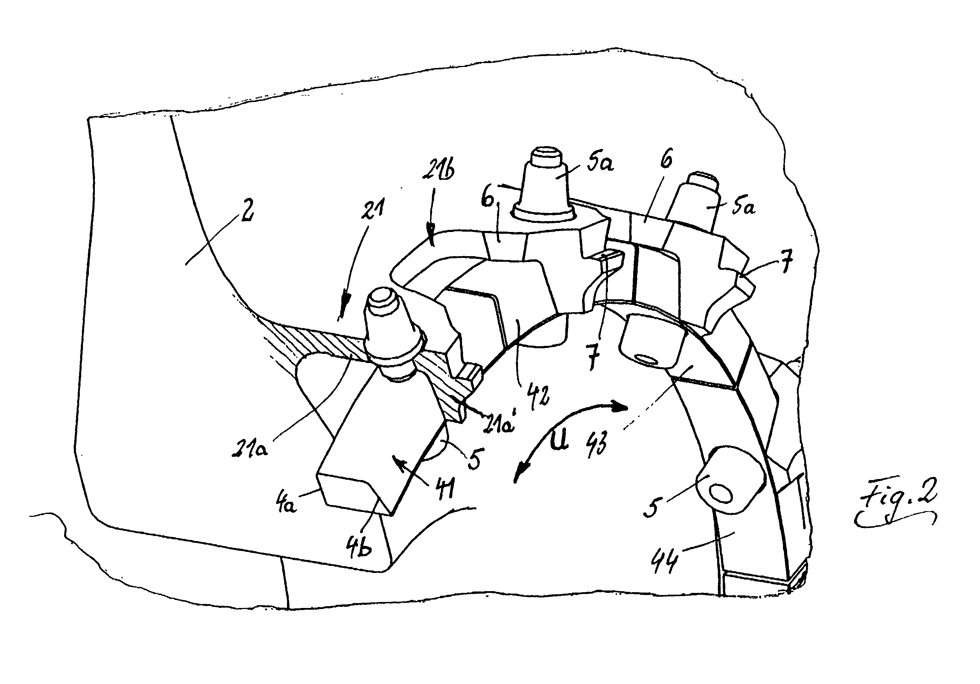

Von den einander zugewandten Stirnseiten der Laufscheiben 2, 3 ragen einander zugewandte Verbindungsstege 21, 31 ab, die in Radialrichtung R betrachtet im wesentlichen in gleicher Höhe liegen und einen bezüglich der Rotationsachse 1 umlaufenden Verbindungsflansch bilden. Wie insbesondere aus den **Figuren 3 und 2** hervorgeht, weist jeder Verbindungssteg 21 bzw. 31 in Umfangsrichtung U betrachtet abwechselnd im wesentlichen in Axialrichtung A vorspringende Finger 21a bzw. 31a sowie neben diesen liegende Aussparungen 21b bzw. 31b auf. Die Anordnung ist nun so getroffen, daß die Finger 21a des Verbindungssteges 21 der Laufscheibe 2 in die Aussparungen 31b des Verbindungssteges 31 der Laufscheibe 3 eingreifen, während die Finger 31a des Verbindungssteges 31 der Laufscheibe 3 in die Aussparungen 21b des Verbindungssteges 21 der Laufscheibe 2 eingreifen. Bereits hierdurch wird eine drehfeste Verbindung der beiden Laufscheiben 2, 3 hergestellt.

Diese drehfeste Verbindung muß jedoch noch in Axialrichtung A gesichert werden, d.h. die Laufscheiben 2, 3 müssen aneinander gehalten werden und sollten dabei zusätzlich gegeneinander verspannbar sein. Hierzu ist ein in einzelne Ringsegmente 41, 42, 43, 44, 45, ..... unterteilter bzw. aus diesen zusammengesetzter Haltering 4 vorgesehen, der in Radialrichtung R betrachtet an der Innenseite der Verbindungsstege 21, 31 anliegt und über sich im wesentlichen in Radialrichtung R erstreckende stiftförmige Verbindungselemente 5 mit dem Verbindungssteg 21 verbunden ist. Dabei ist jedes einzelne Ringsegment 41, 42, ...., 45, ..... jeweils mit einem Finger 21a des Verbindungssteges 21 verbunden, d.h. es sind ebenso viele Ringsegmente 41, 42, .... vorhanden, wie Finger 21a am Verbindungssteg 21 vorgesehen sind, wobei darauf hingewiesen sei, daß hier selbstverständlich noch mehrere als die insgesamt 5 dargestellten Ringsegmente 41, 42, usw. benötigt werden und somit auch vorhanden sind, um den Haltering 4 zu einem vollständigen Ring zu komplettieren.

Die Ringsegmente 41, 42, 43, .., ... des Halteringes 4 besitzen einen im wesentlichen trapezförmigen Querschnitt, wie insbesondere aus den **Figuren 1**, **2** hervorgeht und liegen mit ihren einander gegenüberliegenden Seitenflächen 4a, 4b in Umfangsrichtung U betrachtet abwechselnd an sich in Radialrichtung R nach innen erstreckenden Fortsätzen 21a', 31a' der Finger 21a, 31a, mit welchen diese die Ringsegmente 41, 42, usw. bzw. den Haltering 4 umgreifen, an. Hierdurch werden somit die beiden Laufscheiben 2, 3 in Axialrichtung A gegeneinander fixiert, nachdem - wie insbesondere **Fig. 3** zeigt, wie aber auch aus den **Figuren 2, 1** hervorgeht, jedes Ringsegment 41 bzw. 42 bzw. 43 bzw. .... mittig mit seiner der Laufscheibe 3 zugewandten (in den Figurendarstellungen rechten) Seitenfläche 4b an jeweils einem Fortsatz 21a' der Laufscheibe 2 anliegt, während jedes Ringsegment 41 bzw. 42 bzw. 43 usw. endseitig mit seiner der Laufscheibe 2 zugewandten (in den Figurendarstellungen linken) Seitenfläche 4a an jeweils einem Fortsatz 31a' der Laufscheibe 3 bzw. von deren Fiangern 31a anliegt.

Wie bereits kurz erwähnt ist jedes Ringsegment 41, 42, 43, ..., ... mittels eines lösbaren stiftförmigen Verbindungselementes 5 am Verbindungssteg 21 bzw. jeweils an einem Finger 21a desselben befestigt, wobei sich jedes stiftförmige Verbindungselement 5 in Radialrichtung R erstreckt. Insbesondere handelt es sich bei diesen Verbindungselementen 5 um Schrauben, die von innen, d.h. von der Rotationsachse 1 her, durch nicht näher bezeichnete Durchgangsbohrungen in den Ringsegmenten 41 bzw. 42 bzw. 43 usw. sowie in den Fingern 21a hindurchgesteckt und in auf der Rückseite bzw. Außenseite des Verbindungssteges 21 vorgesehene Schraubenmuttern 5a eingedreht werden. Da die Ringsegmente 41, 42 usw. einen im wesentlichen trapezförmigen, sich in Radialrichtung R und somit zu den Verbindungsstegen 21 bzw. 31 hin geringfügig verengenden Querschnitt besitzen, werden im übrigen mit einem Festziehen dieser Verbindungselemente 5 bzw. Schrauben in den zugehörigen Schraubenmuttern 5a die beiden Laufscheiben 2, 3 optimal in Axialrichtung A gegeneinander verspannt.

In diesem Zusammenhang sei darauf hingewiesen, daß bereits durch die Verbindungselemente 5 alleine eine drehfeste Verbindung zwischen den beiden Laufscheiben 2, 3 hergestellt werden kann, wenn jedes Verbindungselement 5 gleichzeitig die beiden Verbindungsstege 21, 31 durchdringen würde, was beim hier dargestellten Ausführungsbeispiel so nicht realisiert ist. Für die vorliegende Erfindung wesentlich ist die Tatsache, daß sich die lösbaren stiftförmigen Verbindungselemente 5 im wesentlichen in Radialrichtung R erstrecken, d.h. die größer dimensionierte Längserstreckung dieser Verbindungselemente 5 weist (zumindest im wesentlichen und beim hier erläuterten Ausführungsbeispiel exakt) in Radialrichtung R. Hierdurch ist - wie bereits weiter oben vor der Beschreibung des bevorzugten Ausführungsbeispieles ausführlich erläutert wurde - lediglich ein minimaler Freiraum oder Bauraum zwischen den deien Laufscheiben 2, 3 in Axialrichtung A erforderlich, um diese Verbindungselemente 5 (bevorzugt von innen her) montieren zu können.

An den Fingern 21a, 31a und/oder an den Aussparungen 21b, 31b sind Paßflächen 6, 7 vorgesehen, wobei die Paßflächen 6, 7 am Verbindungssteg 21 der Laufscheibe 2 mit den entsprechenden Paßflächen 6, 7 am Verbindungssteg 31 der Laufscheibe 3 zusammenwirken, um eine optimale Verbindunsgpassung zwischen diesen beiden Laufscheiben 2, 3 herzustellen. Dabei wirken die seitlich an den Fingern 21a, 31a bzw. an den Aussparungen 21b, 31b vorgesehenen Paßflächen 6 im wesentlichen in Umfangsrichtung U, während die Paßflächen 7 im wesentlichen in Radialrichtung R wirken, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen.

Stets zeichnet sich eine erfindungsgemäße Verbindungsanordnung der beiden hintereinander angeordneten Laufscheiben 2, 3 einer Axial-Strömungsmaschine dadurch aus, daß der in Axialrichtung A gemessene Abstand zwischen diesen Laufscheiben 2, 3 nur unwesentlich größer sein muß als die Breite der Verbindungselemente 5 bzw. hier als die Breite des Halteringes 4 oder der Ringsegmente 41, 42 usw. mißt. Vorteilhafterweise können auch bei einem Bruch eines Verbindungselementes 5 bzw. einer Schraube weder das entsprechende Ringsegment 41 bzw. 42 usw., noch die gebrochene Schraube selbst nach außen weggeschleudert werden, da sie durch die Verbindungsstege 21, 31 zurückgehalten werden. Dabei wird die beschriebene Verbindung zwischen den Laufscheiben 2, 3 auch noch bei einem (ohnehin unwahrscheinlichen) Bruch mehrerer Schrauben bzw. Verbindungselemente 5 aufrechterhalten.

### Bezugszeichenliste:

- 1: Rotationsachse

- 2: (in den Figuren linke) Laufscheibe
- 21: Verbindungssteg von 2
- 21a: Finger
- 21a': Fortsatz von 21a (sich in R nach innen erstreckend)
- 21b: Aussparung in 21

- 3: (in den Figuren rechte) Laufscheibe
- 31: Verbindungssteg von 3
- 31a: Finger
- 31a': Fortsatz von 31a (sich in R nach innen erstreckend)
- 31b: Aussparung in 31

- 4: Haltering
- 4a: (linke) Seitenfläche von 4 bzw. von 41, 42, usw.
- 4a: (rechte) Seitenfläche von 4 bzw. von 41, 42, usw.
- 41: Ringsegment
- 42,43: Ringsegmente
- 44,45: Ringsegmente

- 5: stiftförmiges Verbindungselement, insbesondere Schraube
- 5a: Schraubenmutter

- 6: Paßfläche
- 7: Paßfläche

- A: Axialrichtung
- R: Radialrichtung
- U: Umfangsrichtung

## Patentansprüche

1. Verbindungsanordnung zweier hintereinander angeordneter Laufscheiben (2, 3) einer Axial-Strömungsmaschine, insbesondere zweier Turbinen-Laufscheiben eines Flugtriebwerkes, wobei von den Laufscheiben (2, 3) im wesentlichen in Axialrichtung (A) abragende und einander zugewandte Verbindungsstege (21, 31) mittels mehrerer über deren Umfang verteilt angeordneter stiftförmiger Verbindungselemente (5), insbesondere Schrauben, lösbar miteinander verbunden sind,
wobei die Verbindungselemente (5) im wesentlichen in der zur Axialrichtung (A) senkrechten Radialrichtung (R) angeordnet sind,
**dadurch gekennzeichnet, daß** jeder Verbindungssteg (21, 31) in Umfangsrichtung (U) betrachtet abwechselnd im wesentlichen in Axialrichtung (A) vorspringende Finger (21a, 31a) sowie daneben liegende Aussparungen (21b, 31b) aufweist, wobei die Finger (21a bzw. 31a) des Verbindungssteges (21 bzw. 31) der einen Laufscheibe (2 bzw. 3) in die Aussparungen (31b, 21b) des Verbindungssteges (31 bzw. 21) der anderen Laufscheibe (3 bzw. 2) eingreifen.

2. Verbindungsanordnung nach Anspruch 1,
**dadurch gekennzeichnet, daß** ein in einzelne Ringsegmente (41, 42, 43, usw.) unterteilter Haltering (4) in Radialrichtung (R) betrachtet an der Innenseite der Verbindungsstege (21, 31) anliegt und über die sich im wesentlichen in Radialrichtung (R) erstreckenden Verbindungselemente (5) mit zumindest einem der beiden Verbindungsstege (21, 31) verbunden ist.

3. Verbindungsanordnung nach Anspruch 2,
**dadurch gekennzeichnet, daß** die Ringsegmente (41, 42, 43, usw.) des Halteringes (4) einen im wesentlichen trapezförmigen Querschnitt besitzen und mit ihren Seitenflächen (4a, 4b) in Umfangsrichtung (U) betrachtet abwechselnd an sich in Radialrichtung (R) nach innen erstreckenden Fortsätzen (21a', 31a') der Finger (21a, 31a), mit welchen diese die Ringsegmente (41, 42, usw.) umgreifen, anliegen.

4. Verbindungsanordnung nach einem der Ansprüche 1 bis 3,
**dadurch gekennzeichnet, daß** an den Fingern (21a, 31a) und/oder an den Aussparungen (21b, 31b) Paßflächen (6, 7) vorgesehen sind, wobei die Paßflächen (6, 7) am Verbindungssteg (21 bzw. 31) der einen Laufscheibe (2 bzw. 3) mit den entsprechenden Paßflächen (6, 7) am Verbindungssteg (31 bzw. 21) der anderen Laufscheibe (3 bzw. 2) zusammenwirken.

## Claims

1. Connecting configuration of two rotor disks (2, 3) of an axial-flow turbomachine arranged one behind the other, more particularly two turbine rotor disks of an aero-engine, in which connecting arms (21, 31) protruding from the rotor disks (2, 3) essentially in the axial direction (A) and facing each other are separably joined by several, pin-type fasteners (5), in particular bolts, distributed along the circumference,
with the fasteners (5) extending essentially in the radial direction (R), which is normal to the axial direction (A),
**characterized in that** each connecting arm (21, 31) features an alternation of prongs (21a, 31a) extending essentially in the axial direction (A) and of adjacent recesses (21b, 31b), with the prongs (21a or 31a, respectively) of the connecting arm (21 or 31, respectively) of one rotor disk (2 or 3, respectively) engaging the recesses (31b, 21b) of the connecting arm (31 or 21, respectively) of the other rotor disk (3 or 2, respectively).

2. Connecting configuration of Claim 1,
**characterized in that** a retaining ring (4) subdivided into individual ring segments (41, 42, 43, etc.) lodges against the inner side of the connecting arms (21, 31), as viewed in the radial direction (R), and is connected to at least one of the two connecting arms (21, 31) by way of fasteners (5) extending essentially in the radial direction (R).

3. Connecting configuration of Claim 2,
**characterized in that** the rings segments (41, 42, 43 etc.) of the retaining ring (4) have an essentially trapezoidal cross-section and, when viewed in the circumferential direction (U), alternately lodge with their fronts (4a, 4b) on the projections (21a', 31a') of the prongs (21a, 31a), said projections extending inwards in the radial direction (R) and embracing the ring segments (41, 42 etc.)

4. Connecting configuration in accordance with one of the Claims 1 to 3,
**characterized in that** mating faces (6, 7) are provided on the prongs (21a, 31a) and/or the recesses (21b, 31b), with the mating faces (6, 7) on the connecting arm (21 or 31, respectively) of one rotor disk (2 or 3, respectively) interacting with the corresponding mating faces (6, 7) on the connecting arm (31 or 21, respectively) of the other rotor disk (3 or 2, respectively).

## Revendications

1. Système de liaison de deux disques de turbine (2, 3) placés l'un derrière l'autre d'une turbomachine axiale, en particulier de deux disques de turbine d'un groupe aéropropulseur, pour lequel des traverses de liaison (21, 31) qui dépassent des disques de turbine (2, 3) principalement en direction axiale (A) et qui sont orientées les unes vers les autres sont reliées les unes aux autres de façon amovible à l'aide de plusieurs éléments de liaison (5) en forme de cheville répartis sur leur pourtour, en particulier des vis,
les éléments de liaison (5) étant disposés principalement dans la direction radiale (R) perpendiculaire à la direction axiale (A),
**caractérisé en ce que**
vue en direction de pourtour (U) chaque traverse de liaison (21, 31) présente en alternance principalement en direction axiale (A) des doigts (21a, 31a) proéminents ainsi que des évidements (21b, 31b) placés à côté, les doigts (21a ou 31a) de la traverse de liaison (21 ou 31) de l'un des disques de turbine (2 ou 3) étant en prise dans les évidements (31b ou 21b) de la traverse de liaison (31 ou 21) de l'autre disque de turbine (3 ou 2).

2. Système de liaison selon la revendication 1,
**caractérisé en ce qu'**
une bague de support (4) subdivisée en segments de bague (41, 42, 43, etc.) distincts, vue en direction radiale (R), s'applique sur le côté intérieur de la traverse de liaison (21, 31) et est reliée à au moins l'une des deux traverses de liaison (21, 31) au moyen des éléments de liaison (5) qui s'étendent principalement en direction radiale (R).

3. Système de liaison selon la revendication 2,
**caractérisé en ce que**
les segments de bague (41, 42, 43, etc.) de la bague de support (4) possèdent une section transversale pratiquement trapézoïdale et vues en direction de pourtour (U) s'appliquent avec leurs surfaces latérales (4a, 4b) alternativement sur des prolongements (21a', 31a') des doigts (21a, 31a) qui s'étendent vers l'intérieur en direction radiale (R) et avec lesquels ceux-ci entourent les segments de bague (41, 42, etc.)

4. Système de liaison selon l'une des revendications 1 à 3,
**caractérisé en ce que**
l'on prévoit sur les doigts (21a, 31a) et/ou sur les évidements (21b, 31b) des surfaces d'ajustage (6, 7), les surfaces d'ajustage (6, 7) sur la traverse de liaison (21 ou 31) de l'un des disques de turbine (2 ou 3) agissant conjointement avec les surfaces d'ajustage (6, 7) correspondantes sur la traverse de liaison (31 ou 21) de l'autre disque de turbine (3 ou 2).
